# EUROPÄISCHE PATENTSCHRIFT

(11) **EP 1 819 937 B1**
(45) Veröffentlichungstag und Bekanntmachung des Hinweises auf die Patenterteilung: **14.05.2008**
(21) Anmeldenummer: 05813948.6
(22) Anmeldetag: 29.11.2005
(51) Int. Cl.: F16D 65/38, F16D 65/56, F16D 65/14

(54) **PNEUMATISCH ODER ELEKTROMECHANISCH BETÄTIGBARE SCHEIBENBREMSE**
PNEUMATICALLY OR ELECTROMECHANICALLY ACTUATED DISK BRAKE
FREIN A DISQUE A COMMANDE PNEUMATIQUE OU ELECTROMECANIQUE

(30) Priorität: 30.11.2004 DE 102004057910; 06.04.2005 DE 102005015775
(43) Veröffentlichungstag der Anmeldung: 22.08.2007
(73) Patentinhaber: KNORR-BREMSE SYSTEME FÜR NUTZFAHRZEUGE GMBH, 80809 München (DE)
(72) Erfinder: IRASCHKO, Johann, 85301 Schweitenkirchen (DE)
(74) Vertreter: Mattusch, Gundula
(86) Internationale Anmeldenummer: PCT/EP2005/012720
(87) Internationale Veröffentlichungsnummer: WO 2006/058691

(56) Entgegenhaltungen:
- DE-A1- 4 032 886
- DE-U1- 9 422 342
- US-B1- 6 213 255

## Beschreibung

Die vorliegende Erfindung betrifft eine pneumatisch oder elektromechanisch betätigbare Scheibenbremse gemäß dem Oberbegriff des Anspruchs 1.

Eine derartige Scheibenbremse ist aus der DE 94 22 342 U1 bekannt. Hierbei wirkt ein Drehhebel auf eine Brücke ein, in der zwei Stellspindeln gelagert sind, die jeweils ein Druckstück zur Aufnahme eines Bremsbelages aufweisen, der bei einer Bremsung an eine Bremsscheibe angedrückt wird. Die beiden Stellspindeln sind mit einem Außengewinde versehen und jeweils in eine Gewindebohrung der Brücke eingeschraubt.

Mittels einer Nachstelleinrichtung, die einer der Stellspindeln zugeordnet ist, wird durch Verdrehen der Stellspindeln in den Gewindebohrungen bei Verschleiß des Reibbelages der Bremsbelag soweit zugestellt, dass ein Lüftspiel zwischen dem Bremsbelag und der Bremsscheibe im wesentlichen immer konstant bleibt. Hierzu wird ein konzentrisch in einer Stellspindel angeordneten Nachsteller z.B. über ein Antriebselement vom Bremshebel angetrieben.

Da dieser Nachsteller jedoch lediglich in einer Stellspindel angeordnet ist, die Nachstellung des Bremsbelages jedoch gleichmäßig erfolgen soll und damit auch die zweite Stellspindel entsprechend zu verstellen ist, ist eine Transmissionseinrichtung vorgesehen, die die Drehbewegung der einen Stellspindel auf die andere synchron überträgt.

Als Transmissionselement wird beispielsweise eine Gliederkette eingesetzt, die auf Kettenrädern der Stellspindeln umlaufend gerührt ist.

Aus der DE 40 32 886 A1 ist eine Scheibenbremse bekannt, bei der das Transmissionselement aus einem Zahnriemen besteht, der in entsprechend geformte Zahnräder der Stellspindeln eingreift.

Allerdings sind sowohl die Gliederkette wie auch der Zahnriemen relativ dick, so dass ein entsprechender Bauraum vorhanden sein muss, was jedoch der Forderung entgegensteht, die Abmaße der Scheibenbremse insgesamt zu minimieren.

Darüber hinaus ist für die Gliederkette aufgrund der beweglichen Teile wie Gliederbolzen für einen dauerhaften Betrieb eine Schmierung erforderlich, was naturgemäß sowohl bei der Montage wie auch beim Betrieb mit einem gewissen Arbeitsaufwand verbunden ist.

Auch ist die Herstellung der Kettenräder als integraler Bestandteil der Stellspindeln verhältnismäßig aufwendig und daher teuer.

Der vorliegenden Erfindung liegt daher die Aufgabe zugrunde, eine Scheibenbremse der gattungsgemäßen Art so weiter zu entwickeln, dass ihr Nachstellsystem einfacherer und kostengünstiger realisierbar und unempfindlicher im Betrieb ist.

Diese Aufgabe wird durch eine Scheibenbremse gelöst, die die Merkmale des Anspruchs 1 aufweist.

Ein mit Vorsprüngen oder Löchern versehenes, aus handelsüblichem Bandmaterial gebildete Blechband ist sehr einfach und kostengünstig herzustellen. Dies trifft gleichermaßen auf die Fertigung der Treibräder zu, wobei die Vorsprünge oder Löcher durch Stanzen hergestellt sein können, während die Treibräder ebenfalls aus Blech bestehen können, vorzugsweise durch Umformen hergestellt.

Da die Bewegung der Stellspindeln mit sehr geringer Geschwindigkeit, quasi statisch, erfolgt, kann auf eine besonders präzise, für größere Dynamik ausgelegte Bauweise des Transmissionselementes sowie der Treibräder verzichtet werden.

Naturgemäß ist dies mit einer wesentlichen Kostenersparnis verbunden, die vor allem deshalb von besonderer Bedeutung ist, weil Scheibenbremsen für Nutzfahrzeuge als Serienteile in großen Stückzahlen hergestellt werden.

Eine einfache und kostengünstige Herstellung der Treibräder ist auch dann möglich, wenn diese als Aluminiumdruckgussteile, als Sinterteile, Kaltfließpressteile oder als Kunststoffteile ausgebildet sind.

Entsprechend der Ausbildung des Blechbandes weist jedes Treibrad umfängliche, mit den Vorsprüngen oder Löchern des Blechbandes korrespondierende Formschlussteile auf, die bei Ausbildung von Vorsprüngen im Blechband als Zähne oder Vertiefungen ausgebildet sind.

Bei Löchern im Blechband, die in ihrer Grundfläche rechteckig, rund oder in anderen geometrischen Formen ausgebildet sein können, sind an diese Grundfläche angepasste Stifte an den Treibrädern vorgesehen.

Nach einem weiteren Gedanken der Erfindung sind diese Stifte konisch, zum freien Ende hin sich verjüngend ausgebildet, so dass das aufgesteckte Blechband spielfrei anliegt.

Die durch Näpfchenbildung hergestellten Vorsprünge des Blechbandes können in ihrer Querschnittskontur ebenfalls unterschiedlich ausgebildet sein. Auch hier bietet sich eine konische Formgebung an, die überdies beim Prägen der Näpfchen Vorteile bietet.

Da das Blechband, im Gegensatz zu einer Gliederkette, keine beweglichen Teile aufweist, kann auf eine Schmierung vollständig verzichtet werden. Hierdurch ergeben sich natürlich Vorteile gegenüber der Gliederkette, sowohl hinsichtlich der Montage wie auch hinsichtlich der Betriebsbereitschaft.

Bei entsprechender Materialauswahl des Blechbandes und/oder der Treibräder ist die gesamte Nachstelleinrichtung unempfindlich gegenüber Korrosions- und Schmutzbelastung, wobei als Material für das Blechband ebenso wie für die aus Blech geformten Treibräder ein rostfreies Metall, wie rostfreier Stahl oder ein geeignetes Nichteisenmetall denkbar ist.

Das Blechband weist im übrigen eine geringe Materialdicke und damit eine geringe Masse auf, durch die der gesamte Mechanismus unempfindlich gegen auftretende Rüttelbeanspruchungen ist.

Auch aufgrund der geringen Dicke ist der Bauraumbedarf insbesondere in Längserstreckung des Blechbandes sehr gering, was den Forderungen nach einer Minimierung der Bauteile sehr entgegenkommt.

Weitere vorteilhafte Ausbildungen der Erfindung sind in den Unteransprüchen gekennzeichnet.

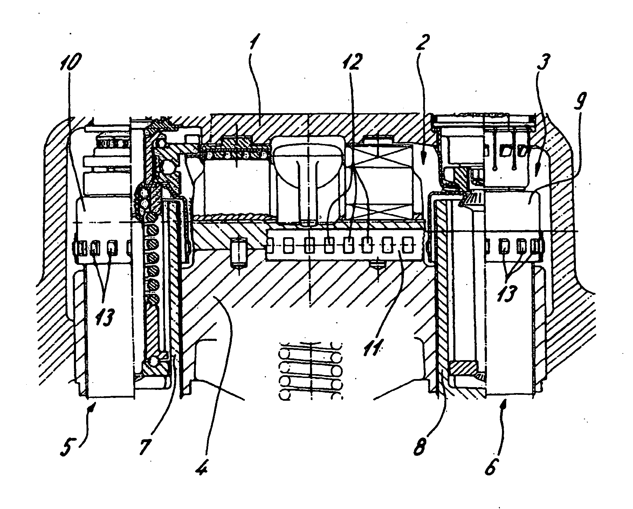

Ein Ausführungsbeispiel der Erfindung wird nachfolgend anhand der beigefügten Zeichnung beschrieben.

Die einzige Figur zeigt einen Teilausschnitt einer erfindungsgemäßen Scheibenbremse in einer geschnittenen Draufsicht.

In der Figur ist ein Teil einer Scheibenbremse, insbesondere für ein Nutzfahrzeug, gezeigt, mit einem eine nicht dargestellte Bremsscheibe umfassenden Bremssattel 1.

Im Bremssattel 1 ist eine Zuspanneinrichtung 2 angeordnet, mit der ebenfalls nicht dargestellte Bremsbeläge an die Bremsscheibe drückbar sind.

Hierzu greift die Zuspannvorrichtung 2 über eine Brücke 4 an zwei parallel und mit Abstand zueinander in der Brücke 4 angeordnete Stellspindeln 5, 6 an.

Zur Beibehaltung eines Lüftspiels zwischen dem Bremsbelag und der Bremsscheibe ist eine Nachstelleinrichtung 3 vorgesehen, mittels der Gewinderohre 7, 8 der Stellspindeln 5, 6, die in die Brücke 4 eingeschraubt sind, relativ dazu axial verstellbar sind. Dabei greift ein Antrieb an die eine Stellspindel 5 an, während die andere, abtriebseitige Stellspindel 6 über ein als Blechband 11 ausgebildetes Transmissionselement bewegungsabhängig damit verbunden ist.

Im vorliegenden Ausführungsbeispiel weist das Blechband im gleichmäßigem Abstand in Längsrichtung angeordnete, im Grundriss rechteckige Löcher 12 auf, die formschlüssig an Treibrädern 9, 10 der Stellspindeln 5, 6 anliegen.

Hierzu ist jedes Treibrad 9, 10 mit umfänglichen Zähnen 13 versehen, die passgenau in die jeweils zugeordneten Löcher 12 eingreifen und so den Formschluss herstellen.

Die Treibräder 9, 10 sind als Blechformteile topfartig ausgebildet und mit der jeweiligen Stellspindel 5, 6 verdrehsicher verbunden.

Die Zähe 13 sind durch von innen her eingeprägte Näpfchen gebildet, die nach außen hin vorstehen. Die topfartigen Treibräder 9, 10 überdecken die zugeordneten Gewinderohre 7, 8 stirnseitig und bilden somit gleichzeitig einen Schutz von deren Innenräumen vor Verschmutzungen.

Das Blechband 11 ist in seiner Dicke so bemessen, dass eine problemlose Umlenkung entsprechend dem Radius der Treibräder 9, 10 möglich ist.

Aufgrund der dadurch gegeben hohen Flexibilität des Blechbandes 11 sind auch die zur Umlenkung des Blechbandes 11 notwendigen, durch die Nachstelleinrichtung 3 aufzubringenden Kräfte vernachlässigbar gering.

Im übrigen kann auch die Breite des Blechbandes 11 relativ schmal gehalten sein, so dass sich bei unveränderter Funktionsfähigkeit gegenüber dem bekannten Transmissionselement lediglich ein verminderter Platzbedarf ergibt.

### Bezugszeichenliste

- 1: Bremssattel
- 2: Zuspanneinrichtung
- 3: Nachstelleinrichtung
- 4: Brücke
- 5: Stellspindel
- 6: Stellspindel
- 7: Gewinderohr
- 8: Gewinderohr
- 9: Treibrad
- 10: Treibrad
- 11: Blechband
- 12: Loch
- 13: Zahn

## Patentansprüche

1. Pneumatisch oder elektromechanisch betätigbare Scheibenbremse, insbesondere für ein Nutzfahrzeug, mit
a) einem eine Bremsscheibe übergreifenden Bremssattel (1),
b) einer im Bremssattel (1) angeordneten Zuspanneinrichtung (2) zum Andrücken von Bremsbelägen an die Bremsscheibe,
c) zwei parallel und abständig zueinander angeordneten Stellspindeln (5, 6), die mit der Zuspanneinrichtung (2) in Wirkverbindung stehen,
d) einer im Bremssattel (1) positionierten Nachstelleinrichtung (3), mit der über eine axiale Verstellung der Stellspindeln (5, 6) eine verschleißbedingte Änderung eines Lüftspiels zwischen dem Bremsbelag und der Bremsscheibe im wesentlichen ausgleichbar ist,
e) sowie einem Transmissionselement, das an beiden Stellspindeln (5, 6) angreift und mit dem diese synchron verstellbar sind,
**dadurch gekennzeichnet, dass**
f) das Transmissionselement aus einem mit Vorsprüngen oder Löchern (12) versehenen Blechband (11) besteht, das formschlüssig an an den Stellspindeln (5, 6) befestigten Treibrädern (9, 10) anliegt.

2. Scheibenbremse nach Anspruch 1, **dadurch gekennzeichnet, dass** die Löcher (12) bzw. Vorsprünge des Blechbandes (11) durch Stanzen oder Prägen eingebracht sind.

3. Scheibenbremse nach Anspruch 1 oder 2, **dadurch gekennzeichnet, dass** die Löcher (12) oder Vorsprünge im Grundriss rechteckig, rund, oval oder polygon sind.

4. Scheibenbremse nach einem der vorhergehenden Ansprüche, **dadurch gekennzeichnet, dass** jedes Treibrad (9, 10) mit den Löchern (12) bzw. den Vorsprüngen korrespondierende Zähne (13) bzw. Vertiefungen aufweist.

5. Scheibenbremse nach einem der vorhergehenden Ansprüche, **dadurch gekennzeichnet, dass** die Zähne (13) bzw. Vertiefungen der Treibräder (9, 10) passgenau in den zugeordneten Löchern (12) bzw. Vorsprüngen einliegen.

6. Scheibenbremse nach einem der vorhergehenden Ansprüche, **dadurch gekennzeichnet, dass** die Vorsprünge des Blechbandes (11) oder die Zähne (13) der Treibräder (9, 10) zu ihrem freien Ende hin konisch verjüngt sind.

7. Scheibenbremse nach einem der vorhergehenden Ansprüche, **dadurch gekennzeichnet, dass** jedes Treibrad (9, 10) als Blechformteil ausgebildet ist.

8. Scheibenbremse nach einem der vorhergehenden Ansprüche, **dadurch gekennzeichnet, dass** jedes Treibrad (9, 10) topfartig ausgebildet ist und an seiner Mantelfläche umlaufend mit Zähnen (13) oder Ausnehmungen versehen ist, in denen die zugeordneten Löcher (12) bzw. Vorsprünge einliegen.

9. Scheibenbremse nach einem der vorhergehenden Ansprüche, **dadurch gekennzeichnet, dass** die Zähne (13) jedes Treibrades (9, 10) durch näpfchenartiges Prägen nach außen hin geformt sind.

10. Scheibenbremse nach einem der vorhergehenden Ansprüche, **dadurch gekennzeichnet, dass** die topfartigen Treibräder (9, 10) die Stellspindeln an einem Ende stirnseitig weitgehend überdecken. '

11. Scheibenbremse nach einem der vorhergehenden Ansprüche, **dadurch gekennzeichnet, dass** das Blechband (11) und/oder die Treibräder (9, 10) aus rostfreiem Metall, vorzugsweise aus rostfreiem Stahl gebildet sind.

12. Scheibenbremse nach einem der vorhergehenden Ansprüche, **dadurch gekennzeichnet, dass** die Treibräder (9, 10) als Aludruckguss-, Sinter-, Kaltfließpress- oder Kunststoffteile ausgebildet sind.

## Claims

1. Pneumatically or electromechanically actuated disk brake, in particular for a commercial vehicle, comprising
a) a brake calliper (1) overlapping a brake disk,
b) an application device (2) located in the brake calliper (1) for pressing brake pads against the brake disk,
c) two actuating screws (5, 6) arranged parallel to and at a distance from one another and being in active connection with the application device (2),
d) an adjusting device (3) positioned in the brake calliper (1), by means of which a wear-induced change of a clearance between the brake pad and the brake disk can be substantially compensated via an axial adjustment of the actuating screws (5, 6),
e) and a transmission element acting on the two actuating screws (5, 6) for their synchronous adjustment,
**characterised in that**
f) the transmission element is represented by a sheet metal strip (11) provided with projections or holes (12), which positively bears against driving wheels (9, 10) mounted on the actuating screws (5, 6).

2. Disk brake according to claim 1, **characterised in that** the holes (12) or projections of the sheet metal strip (11) are produced by embossing or stamping.

3. Disk brake according to claim 1 or 2, **characterised in that** the holes (12) or projections are rectangular, circular, oval or polygonal in shape.

4. Disk brake according to any of the preceding claims, **characterised in that** each driving wheel (9, 10) has teeth (13) or recesses corresponding to the holes (12) or projections.

5. Disk brake according to any of the preceding claims, **characterised in that** the teeth (13) or recesses are tailored for engagement with the associated holes (12) or projections.

6. Disk brake according to any of the preceding claims, **characterised in that** the projections of the sheet metal strip (11) or the teeth (13) of the driving wheels (9, 10) taper towards their free ends.

7. Disk brake according to any of the preceding claims, **characterised in that** each driving wheel (9, 10) is designed as a sheet metal part.

8. Disk brake according to any of the preceding claims, **characterised in that** each driving wheel (9, 10) is pot-shaped in design, its entire circumferential surface being provided with teeth (13) or recesses for engagement with the associated holes (12) or projections.

9. Disk brake according to any of the preceding claims, **characterised in that** the teeth (13) of each driving wheel (9, 10) are produced as embossed outward-oriented small cups.

10. Disk brake according to any of the preceding claims, **characterised in that** the pot-shaped driving wheels (9, 10) to a great extent cover one end of the actuating screws.

11. Disk brake according to any of the preceding claims, **characterised in that** the sheet metal strip (11) and/or the driving wheels (9, 10) are produced from a stainless metal, preferably from stainless steel.

12. Disk brake according to any of the preceding claims, **characterised in that** the driving wheels (9, 10) are designed as aluminium die cast parts, sintered parts, cold extruded parts or plastic parts.

## Revendications

1. Frein à disque à commande pneumatique ou électromécanique, en particulier pour un véhicule utilitaire, comprenant
a) un étrier de frein (1) chevauchant un disque de frein (3)
b) un moyen de serrage de frein (2) disposé audit étrier de frein (1) à presser des garnitures de frein contre ledit disque de frein,
c) deux broches de réglage (5, 6) disposées l'une en parallèle à l'autre à un écart l'une de l'autre, qui se trouvent en connexion opérative avec ledit moyen de serrage (2),
d) un moyen de rattrapage (3) positionné dans ledit étrier de frein (1), moyennant duquel une variation d'un jeu d'aération, qui est dû à l'usure, entre ladite garniture de frein et ledit disque de frein est essentiellement compensable via un réglage axial desdites broches de réglage (5, 6),
e) ainsi qu'un élément de transmission, qui se trouve en prise auxdites deux broches de réglage (5, 6) et qui sert à régler lesdites broches en synchronisme,
**caractérisé en ce**
f) ledit élément de transmission consiste en un feuillard en tôle (11) pourvu des saillies ou des trous (12), qui porte, à engagement positif, contre des roues motrices (9, 10) attachées auxdites broches de réglage (5, 6).

2. Frein à disque selon la revendication 1, **caractérisé en ce que** lesdits trous (12) ou respectivement lesdites saillies dudit feuillard en tôle (1) sont formés par poinçonnage ou estampage.

3. Frein à disque selon la revendication 1 ou 2, **caractérisé en ce que** lesdits trous (12) ou saillies présentent une projection horizontale rectangulaire, ronde, ovale ou polygonale.

4. Frein à disque selon une quelconque des revendications précédentes, **caractérisé en ce que** chaque roue motrice (9, 10) présente des dents (13) ou respectivement des évidements en correspondance avec lesdits trous (12) ou respectivement lesdites saillies.

5. Frein à disque selon une quelconque des revendications précédentes, **caractérisé en ce que** lesdits dents (13) ou respectivement lesdits évidements desdites roues motrices (9, 10) se trouvent en prise, à ajustage précise, dans lesdits trous (12) ou respectivement lesdites saillies y affectés.

6. Frein à disque selon une quelconque des revendications précédentes, **caractérisé en ce que** lesdites saillies dudit feuillard en tôle (11) ou lesdits dents (13) desdites roues motrices (9, 10) se réduisent en cône vers leur extrémité libre.

7. Frein à disque selon une quelconque des revendications précédentes, **caractérisé en ce que** chaque roue motrice (9, 10) est configurée sous forme d'une pièce usinée en tôle.

8. Frein à disque selon une quelconque des revendications précédentes, **caractérisé en ce que** chaque roue motrice (9, 10) présente une configuration en pot et est pourvue des dents (13) ou des évidements périphériques le long de sa surface de l'enveloppe, dans lesquels lesdits trous (12) ou respectivement lesdites saillies sont logés.

9. Frein à disque selon une quelconque des revendications précédentes, **caractérisé en ce que** lesdits dents (13) de chaque roue motrice (9, 10) sont usinés par estampage en petits godets vers l'extérieur.

10. Frein à disque selon une quelconque des revendications précédentes, **caractérisé en ce que** lesdits roues motrices (9, 10) en pot largement chevauchent lesdites broches de réglage sur la face à une extrémité.

11. Frein à disque selon une quelconque des revendications précédentes, **caractérisé en ce que** ledit feuillard en tôle (11) et/ou lesdites roues motrices (9, 10) sont formés en métal inoxydable, de préférence en acier inoxydable.

12. Frein à disque selon une quelconque des revendications précédentes, **caractérisé en ce que** lesdites roues motrices (9, 10) sont configurées sous forme de pièces coulées d'aluminium sous pression, des pièces frittées, des pièces extrudées à froid ou des pièces en matière plastique.
